(19) **Europäisches Patentamt**
**European Patent Office**
**Office européen des brevets**

(11) **EP 4 779 423 A1**

(12) **EUROPEAN PATENT APPLICATION**
published in accordance with Art. 153(4) EPC

(43) Date of publication:
**22.07.2026 Bulletin 2026/30**

(21) Application number: **23952017.4**

(22) Date of filing: **06.11.2023**

(51) International Patent Classification (IPC):
*G05D 1/00* (2024.01)     *B62D 6/00* (2006.01)
*A01D 34/00* (2006.01)     *B62D 15/02* (2006.01)
*B62D 101/00* (2006.01)

(52) Cooperative Patent Classification (CPC):
**A01D 34/006; A01D 34/00; A01D 34/008;**
**B62D 6/00; B62D 15/02; G05D 1/00; G05D 1/246;**
**G05D 1/6484;** A01D 2101/00; G05D 2105/15;
G05D 2107/23; G05D 2109/10

(86) International application number:
**PCT/CN2023/129982**

(87) International publication number:
**WO 2025/055092 (20.03.2025 Gazette 2025/12)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **11.09.2023 CN 202311172327**

(71) Applicant: **Shenzhen Hanyang Technology Co.,**
**Ltd.**
**Shenzhen, Guangdong 518000 (CN)**

(72) Inventors:
• **HUANG, Yang**
**Shenzhen, Guangdong 518000 (CN)**
• **ZHENG, Chuwei**
**Shenzhen, Guangdong 518000 (CN)**

(74) Representative: **Abel & Imray LLP**
**Westpoint Building**
**James Street West**
**Bath BA1 2DA (GB)**

(54) **SELF-MOVING DEVICE TURNING CONTROL METHOD AND SELF-MOVING DEVICE**

(57)     Disclosed are a turning control method for an autonomous mobile apparatus, and an autonomous mobile apparatus, which belong to the technical field of control of autonomous mobile apparatus. According to the present disclosure, an overall region where the autonomous mobile apparatus travels is acquired; an initial ready-for-turning point is determined according to the overall region; in a case where the autonomous mobile apparatus reaches the initial ready-for-turning point, the autonomous mobile apparatus is controlled to reverse to a target ready-for-turning point; and the autonomous mobile apparatus is controlled to turn based on a preset turning path at the target ready-for-turning point, to reach a target point in the overall region.

FIG. 1

**Description**

CROSS-REFERENCE TO RELATED APPLICATIONS

The present disclosure claims priority to Chinese Patent Application No. 202311172327.2, filed with the China National Intellectual Property Administration on September 11, 2023 and entitled "TURNING CONTROL METHOD FOR AUTONOMOUS MOBILE APPARATUS, AND AUTONOMOUS MOBILE APPARATUS", which is incorporated herein by reference in its entirety.

TECHNICAL FIELD

The present disclosure relates to the technical field of control of autonomous mobile apparatus, and in particular to a turning control method for an autonomous mobile apparatus, and an autonomous mobile apparatus.

BACKGROUND

An autonomous mobile apparatus can travel and handle corresponding tasks such as mowing and snow removal during operation.
The inventor has found that the existing autonomous mobile apparatus turns in situ during snow removal or mowing, for example, during mowing by a mower. With a tracked structure, the autonomous mobile apparatus has heavy weight and a large vehicle front, and encounters great resistance against a lawn. A strong torsional force generated during in-situ rotation will twist grass off and lift turf up.

SUMMARY

A primary objective of the present disclosure is to provide a turning control method for an autonomous mobile apparatus, and an autonomous mobile apparatus to solve the technical problem of an undesirable turning effect of an autonomous mobile apparatus in the prior art.
To achieve the above objective, the present disclosure provides a turning control method for an autonomous mobile apparatus. The method includes:

acquiring an overall region where the autonomous mobile apparatus travels;
determining an initial ready-for-turning point according to the overall region;
controlling, in a case where the autonomous mobile apparatus reaches the initial ready-for-turning point, the autonomous mobile apparatus to reverse to a target ready-for-turning point; and
controlling the autonomous mobile apparatus to turn based on a preset turning path at the target ready-for-turning point, to reach a target point in the overall region.

In addition, to achieve the above objective, the present disclosure further provides a turning control device for an autonomous mobile apparatus. The turning control device for an autonomous mobile apparatus includes:

an acquisition module configured to acquire an overall region where the autonomous mobile apparatus travels;
a determination module configured to determine an initial ready-for-turning point according to the overall region; and
a control module configured to control, in a case where the autonomous mobile apparatus reaches the initial ready-for-turning point, the autonomous mobile apparatus to reverse to a target ready-for-turning point; where
the control module is further configured to control the autonomous mobile apparatus to turn based on a preset turning path at the target ready-for-turning point, to reach a target point in the overall region.

In addition, to achieve the above objective, the present disclosure further provides an autonomous mobile apparatus. The autonomous mobile apparatus includes a vehicle front, a vehicle body, a traveling apparatus, and a controller, where the vehicle front is detachably connected to the vehicle body, the traveling apparatus and the controller are arranged at the vehicle body, the controller is configured to control the traveling apparatus to turn, the controller is configured to run a turning control program for the autonomous mobile apparatus, and the turning control program for the autonomous mobile apparatus is configured to implement steps of the above turning control method for an autonomous mobile apparatus.
According to the present disclosure, the overall region where the autonomous mobile apparatus travels is acquired; the initial ready-for-turning point is determined according to the overall region; in a case where the autonomous mobile apparatus reaches the initial ready-for-turning point, the autonomous mobile apparatus is controlled to reverse to the target ready-for-turning point; and the autonomous mobile apparatus is controlled to turn based on the preset turning path at the target ready-for-turning point, to reach the target point in the overall region. The autonomous mobile apparatus is controlled to reverse and then turn, so that a turning effect is improved, and irreversible damage to a lawn is avoided.
The details in one or more embodiments of the present disclosure are set forth in the following accompanying drawings and descriptions, and other features and advantages of the present disclosure will become apparent from the description, accompanying drawings, and claims.

BRIEF DESCRIPTION OF DRAWINGS

FIG. 1 is a schematic flowchart of a first embodiment of a turning control method for an autonomous mobile apparatus according to the present disclosure;

FIG. 2 is a schematic diagram of division of an overall region of an embodiment of a turning control method for an autonomous mobile apparatus according to the present disclosure;

FIG. 3 is a schematic diagram of an initial ready-for-turning point and a target ready-for-turning point of an embodiment of a turning control method for an autonomous mobile apparatus according to the present disclosure;

FIG. 4 is a schematic diagram of controlling an autonomous mobile apparatus to turn based on a preset turning path, to reach a target point in an overall region of an embodiment of a turning control method for an autonomous mobile apparatus according to the present disclosure;

FIG. 5 is a schematic flowchart of a second embodiment of a turning control method for an autonomous mobile apparatus according to the present disclosure;

FIG. 6 is a schematic diagram of a preset turning path of an embodiment of a turning control method for an autonomous mobile apparatus according to the present disclosure;

FIG. 7 is a schematic flowchart of a third embodiment of a turning control method for an autonomous mobile apparatus according to the present disclosure;

FIG. 8 is a schematic diagram of a ready-for-turning point and a target point of an embodiment of a turning control method for an autonomous mobile apparatus according to the present disclosure;

FIG. 9 is a schematic flowchart of a fourth embodiment of a turning control method for an autonomous mobile apparatus according to the present disclosure;

FIG. 10 is a schematic flowchart of a fifth embodiment of a turning control method for an autonomous mobile apparatus according to the present disclosure; and

FIG. 11 is a structural block diagram of a first embodiment of a turning control device for an autonomous mobile apparatus according to the present disclosure.

The implementations of the objective, function features, and advantages of the present disclosure will be further described in conjunction with the embodiments and the accompanying drawings.

DETAILED DESCRIPTION

It should be understood that specific embodiments described herein are merely used to explain the present disclosure, and are not intended to limit the present disclosure.

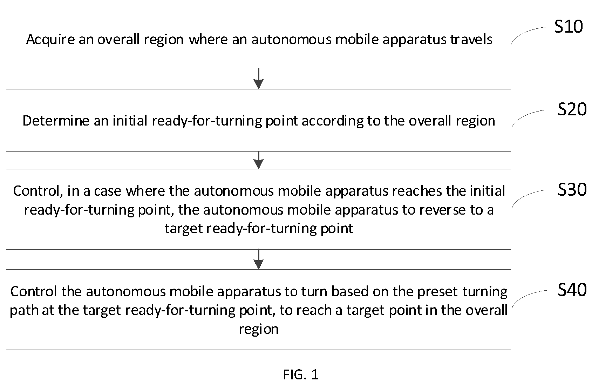

With reference to FIG. 1, a schematic flowchart of a first embodiment of a turning control method for an autonomous mobile apparatus according to the present disclosure is shown in FIG. 1.

In the embodiment, the turning control method for an autonomous mobile apparatus includes:

S10: an overall region where the autonomous mobile apparatus travels is acquired.

It should be noted that an execution subject in the embodiment may be a turning control device for an autonomous mobile apparatus, or a device or apparatus capable of implementing the same or similar functions, which is not limited in the embodiment. The embodiment is described with the turning control device for an autonomous mobile apparatus as an example.

In a specific implementation, the autonomous mobile apparatus may be a mower, a snow blower, a mopping machine, etc., which is not limited in the embodiment. The embodiment is described with the mower as an example.

The overall region where the autonomous mobile apparatus travels may be a region where mowing is required to be performed by the mower. Before mowing, the mower may be controlled to travel along the periphery in a circle. Recording is performed through a map, and an overall working region is finally formed.

Most mowing paths of the existing mower are parallel, and thus two times of consecutive 90-degree turning are required between two adjacent paths. In a case of in-situ rotation, the lawn will be severely worn, and irreversible damage to the lawn will be caused.

According to the embodiment, the in-situ rotation is divided into Bezier turning with a turning radius of 0.5 m to 1 m, so that two adjacent parallel paths are connected continuously through two times of Bezier turning and two times of reverse. Thus, a turning track can be smoothed, traveling stability is enhanced, a turning effect is improved, and irreversible damage to the lawn is avoided.

S20: an initial ready-for-turning point is determined according to the overall region.

It should be noted that after the overall region where the autonomous mobile apparatus works is acquired, the overall region may be divided to determine the initial ready-for-turning point for the mower. When the mower travels, a position of an obstacle may be predetermined to avoid repeated turning of the autonomous mobile apparatus.

In an embodiment, the step that an initial ready-for-turning point is determined according to the overall region specifically includes: the overall region is divided, and a plurality of traveling path data are obtained; boundary point data of traveling of the autonomous mobile apparatus are obtained according to the overall region; and the initial ready-for-turning point is determined based on the plurality of traveling path data and the boundary point data.

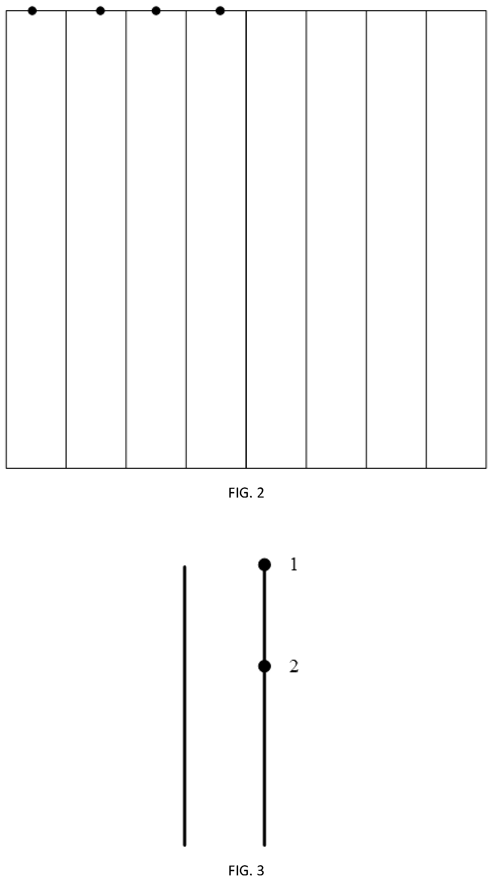

It should be noted that the overall region may be divided into the plurality of traveling paths allowing the mower to travel according to a working condition of the mower. For example, a distance between the paths is in a range of 30 cm to 60cm. Working boundary points are determined during traveling of the mower to determine the initial ready-for-turning point based on the plurality of traveling path data and the boundary point data. One initial ready-for-turning point is determined. As shown in FIG. 2, a schematic diagram of division of the overall region is shown in FIG. 2. By dividing the overall region into the plurality of traveling paths and obtaining the boundary points (i.e. black dots in FIG. 2) according to the overall region, the point at which the autonomous mobile apparatus needs to turn is determined based on the traveling paths of the mower and the boundary points.

S30: in a case where the autonomous mobile apparatus reaches the initial ready-for-turning point, the autonomous mobile apparatus is controlled to reverse to a target ready-for-turning point.

It should be noted that when reaching the initial ready-for-turning point, the autonomous mobile apparatus needs to turn, but turning at the initial ready-for-turning point indicates in-situ turning, which seriously wears the lawn. Thus, the autonomous mobile apparatus may be controlled to reverse to the target ready-for-turning point. As shown in FIG. 3, a schematic diagram of the initial ready-for-turning point and the target ready-for-turning point is shown in FIG. 3. In FIG. 3, a point 1 denotes the initial ready-for-turning point, and a point 2 indicates the target ready-for-turning point. After reaching the point 1, the mower is controlled to reverse to the point 2.

S40: the autonomous mobile apparatus is controlled to turn based on a preset turning path at the target ready-for-turning point, to reach a target point in the overall region.

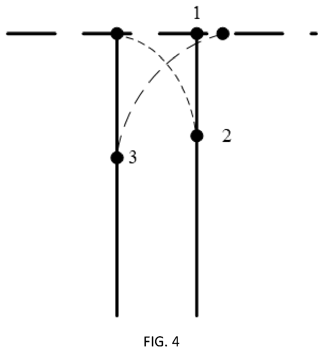

It should be understood that after reaching the target ready-for-turning point, the autonomous mobile apparatus may be controlled to turn. For example, the autonomous mobile apparatus is controlled. The preset turning path may be a second-order Bezier curve, and the autonomous mobile apparatus may be controlled to turn at the target ready-for-turning point based on the preset turning path, to reach the target point in the overall region. As shown in FIG. 4, a schematic diagram of controlling the autonomous mobile apparatus to turn based on the preset turning path, to reach the target point in the overall region is shown in FIG. 4. In FIG. 4, a point 1 denotes the initial ready-for-turning point, a point 2 denotes the target ready-for-turning point, and a point 3 denotes the target point in the overall region. The autonomous mobile apparatus turns based on the preset turning path at the point 2, to reach the point 3.

According to the embodiment, the overall region where the autonomous mobile apparatus travels is acquired. The initial ready-for-turning point is determined according to the overall region. In a case where the autonomous mobile apparatus reaches the initial ready-for-turning point, the autonomous mobile apparatus is controlled to reverse to the target ready-for-turning point. The autonomous mobile apparatus is controlled to turn based on the preset turning path at the target ready-for-turning point, to reach the target point in the overall region. The autonomous mobile apparatus is controlled to reverse and then turn, so that a turning effect is improved, and irreversible damage to a lawn is avoided.

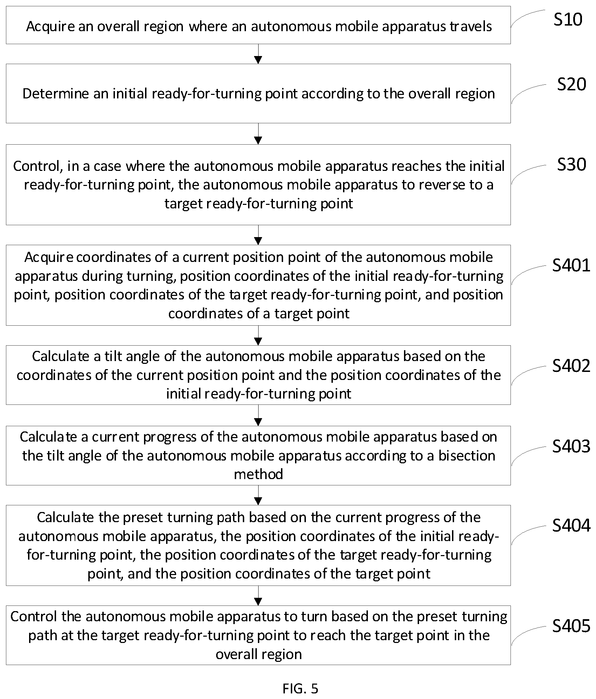

With reference to FIG. 5, a schematic flowchart of a second embodiment of a turning control method for an autonomous mobile apparatus according to the present disclosure is shown in FIG. 5.

Based on the first embodiment, S40 of the turning control method for an autonomous mobile apparatus in the embodiment specifically includes:

S401: coordinates of a current position point of the autonomous mobile apparatus during turning, position coordinates of the initial ready-for-turning point, position coordinates of the target ready-for-turning point, and position coordinates of the target point are acquired.

It should be noted that real-time coordinates of the current position point of the autonomous mobile apparatus may be acquired in a turning process of the autonomous mobile apparatus, and the position coordinates of the initial ready-for-turning point P1, the position coordinates of the target ready-for-turning point P2, and the position coordinates of the target point P3 are acquired.

S402: a tilt angle of the autonomous mobile apparatus is calculated based on the coordinates of the current position point and the position coordinates of the initial ready-for-turning point.

In a specific implementation, the tilt angle of the autonomous mobile apparatus may be calculated based on the coordinates of the current position point and the position coordinates of the initial ready-for-turning point. The tilt angle may be specifically calculated according to an inverse trigonometric function.

S403: a current progress of the autonomous mobile apparatus is calculated based on the tilt angle of the autonomous mobile apparatus according to a bisection method.

In a specific implementation, the current progress of the autonomous mobile apparatus may be obtained based on the tilt angle of the autonomous mobile apparatus according to the bisection method. For example, the calculated tilt angle is compared with a median of a current tilt angle range. If the calculated tilt angle is in the current tilt angle range, it indicates that the target point is in the range, and a half of the progress is achieved, otherwise the target point is in the other half of the tilt angle range. Thus, the current progress of the autonomous mobile apparatus is obtained.

S404: the preset turning path is calculated based on the current progress of the autonomous mobile apparatus, the position coordinates of the initial ready-for-turning point, the position coordinates of the target ready-for-turning point, and the position coordinates of the target point.

It should be noted that a path of the second-order Bezier curve is traced by the function B (t) for the given points P1, P2, and P3. The initial ready-for-turning point P1, the target ready-for-turning point P2, and the target point P3 form a 90-degree turn, corresponding to a process of smoothing a 90-degree turn for three-point turning to the Bezier curve. Thus, the mower control is smoother and stabler.

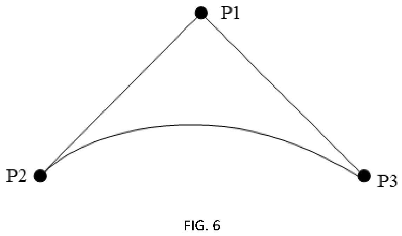

As shown in FIG. 6, a schematic diagram of the preset turning path is shown in FIG. 6. After the current progress of the autonomous mobile apparatus is obtained, path point data during turning may be calculated based on the current progress of the autonomous mobile apparatus, the position coordinates of the initial ready-for-turning point, the position coordinates of the target ready-for-turning point, and the position coordinates of the target point. All the path point data are connected, and the preset turning path is formed.

A process of calculating the path point data is as shown in Formula 1:

$$B(t)=(1-t)^2*P1+2(1-t)t*P2+t^2*P3 \quad (Formula\ 1)$$

In Formula 1, B(t) denotes the path point data, t denotes the current progress of the autonomous mobile apparatus, which may be calculated based on the tilt angle of the autonomous mobile apparatus according to the bisection method, and P1, P2, and P3 correspond to the position coordinates of the initial ready-for-turning point, the position coordinates of the target ready-for-turning point, and the position coordinates of the target point respectively.

S405: the autonomous mobile apparatus is controlled to turn based on the preset turning path at the target ready-for-turning point, to reach a target point in the overall region.

In a specific implementation, after the preset turning path is calculated, the autonomous mobile apparatus may be controlled to turn based on the preset turning path at the target ready-for-turning point, to reach the target point in the overall region.

According to the embodiment, the coordinates of the current position point of the autonomous mobile apparatus during turning, the position coordinates of the initial ready-for-turning point, the position coordinates of the target ready-for-turning point, and the position coordinates of the target point are acquired. The tilt angle of the autonomous mobile apparatus is calculated based on the coordinates of the current position point and the position coordinates of the initial ready-for-turning point. The current progress of the autonomous mobile apparatus is calculated based on the tilt angle of the autonomous mobile apparatus according to the bisection method. The preset turning path is calculated based on the current progress of the autonomous mobile apparatus, the position coordinates of the initial ready-for-turning point, the position coordinates of the target ready-for-turning point, and the position coordinates of the target point. The autonomous mobile apparatus is controlled to turn based on the preset turning path at the target ready-for-turning point, to reach the target point in the overall region. The autonomous mobile apparatus is controlled to turn based on the preset turning path, smoothness control is performed when the autonomous mobile apparatus turns, and thus control of the autonomous mobile apparatus is smoother and stabler.

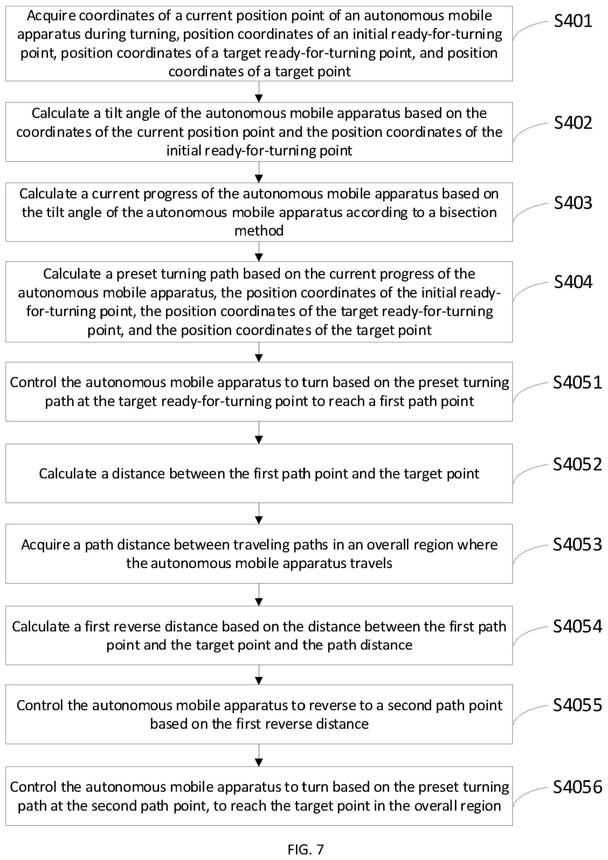

With reference to FIG. 7, a schematic flowchart of a third embodiment of a turning control method for an autonomous mobile apparatus according to the present disclosure is shown in FIG. 7.

Based on the first embodiment, S405 of the turning control method for an autonomous mobile apparatus in the embodiment specifically includes:
S4051: the autonomous mobile apparatus is controlled to turn based on the preset turning path at the target ready-for-turning point, to reach a first path point.

It should be noted that when turning control is performed on the autonomous mobile apparatus, it is impossible to directly control completion of turning. It is required to first control the autonomous mobile apparatus to turn for the first time based on the preset turning path, to reach the first path point. The first path point is a position point reached after the first time of turning.

S4052: a distance between the first path point and the target point is calculated.

In a specific implementation, after the autonomous mobile apparatus is controlled to reach the first path point, the autonomous mobile apparatus is required to turn one more time to reach the target point in the overall region. It is required to control the autonomous mobile apparatus to reverse at the first path point, and then turn based on the preset path, to reach the target point in the overall region. Thus, the distance between the first path point and the target point may be calculated. The distance L1 between the first path point and the target point may be measured.

S4053: a path distance between traveling paths in the overall region where the autonomous mobile apparatus travels is acquired.

It should be noted that the path distance between the traveling paths of the autonomous mobile apparatus is the distance between the traveling paths in the divided overall region, which is denoted by L2.

S4054: a first reverse distance is calculated based on the distance between the first path point and the target point and the path distance.

In a specific implementation, the first reverse distance H1 is related to the distance L1 between the first path point and the target point, and thus the first reverse distance may be calculated based on the distance L1 between the first path point and the target point and the path distance L2. The first reverse distance H1=2L1-L2.

S4055: the autonomous mobile apparatus is controlled to reverse to a second path point based on the first reverse distance.

In a specific implementation, the autonomous mobile apparatus may be controlled to reverse by the first reverse distance, to reach the second path point.

S4056: the autonomous mobile apparatus is controlled to turn based on the preset turning path at the second path point, to reach the target point in the overall region.

In a specific implementation, the autonomous mobile apparatus may be controlled to continuously turn based on the preset turning path at the second path point, to reach the target point in the overall region.

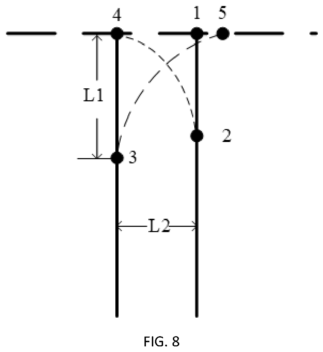

As shown in FIG. 8, a schematic diagram of the ready-for-turning point and the target point is shown in FIG. 8. In FIG. 8, a point 1 denotes the initial ready-for-turning point, a point 2 denotes the target ready-for-turning point, a point 3 denotes the target point, a point 4 denotes the first path point, and a point 5 denotes the second path point. The point 5 probably coincides with the point 1 (when a turning radius is too large, non-coincidence is caused). When reversing to the target ready-for-turning point from the initial ready-for-turning point, the autonomous mobile apparatus is controlled to turn to the first path point 4 based on the preset turning path at the target ready-for-turning point, and reverse to the second path point 5 from the first path point 4. Further, the autonomous mobile apparatus is controlled to turn to the target point 3 based on the preset turning path at the second path point 5. Thus, the turning control flow of the autonomous mobile apparatus is completed.

According to the embodiment, the autonomous mobile apparatus is controlled to turn based on the preset turning path at the target ready-for-turning point, to reach the first path point. The distance between the first path point and the target point is calculated. The path distance between the traveling paths in the overall region where the autonomous mobile apparatus travels is acquired. The first reverse distance is calculated based on the distance between the first path point and the target point and the path distance. The autonomous mobile apparatus is controlled to reverse to the second path point based on the first reverse distance. The autonomous mobile apparatus is controlled to turn based on the preset turning path at the second path point, to reach the target point in the overall region. The autonomous mobile apparatus is continuously controlled to reverse and turn, so that a turning control effect of the autonomous mobile apparatus can be improved.

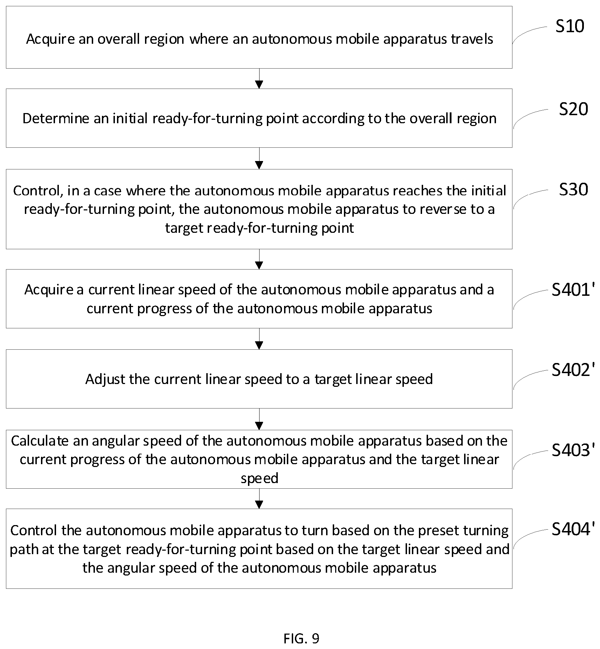

With reference to FIG. 9, a schematic flowchart of a fourth embodiment of a turning control method for an autonomous mobile apparatus according to the present disclosure is shown in FIG. 9.

Based on the first embodiment, step 40 of the turning control method for an autonomous mobile apparatus in the embodiment includes:

S401': a current linear speed of the autonomous mobile apparatus and a current progress of the autonomous mobile apparatus are acquired.

It should be noted that when turning control is performed on the autonomous mobile apparatus, to make the autonomous mobile apparatus turn more smoothly and stably, it is required to control a turning speed of the autonomous mobile apparatus, and the current linear speed of the autonomous mobile apparatus and the current progress of the autonomous mobile apparatus may be acquired. The current progress of the autonomous mobile apparatus may be calculated based on the tilt angle of the autonomous mobile apparatus according to the bisection method. The current linear speed of the autonomous mobile apparatus may be collected through a speed sensor, etc.

S402': the current linear speed is adjusted to a target linear speed.

In a specific implementation, the target linear speed may be preset. The target linear speed is less than the current linear speed of the autonomous mobile apparatus to avoid uncontrolled turning caused by a too high speed of the autonomous mobile apparatus.

For example, if the current linear speed is 0.3 m/s and a preset linear speed is 0.2 m/s, the current linear speed is adjusted to the target linear speed, where the target linear speed is the adjusted speed, i.e. 0.2 m/s.

S403': an angular speed of the autonomous mobile apparatus is calculated based on the current progress of the autonomous mobile apparatus and the target linear speed.

In a specific implementation, the angular speed of the autonomous mobile apparatus may be calculated based on the target linear speed v and the current progress t of the autonomous mobile apparatus. Specifically, a turning radius of the autonomous mobile apparatus during turning may be calculated based on the current progress t of the autonomous mobile apparatus. Further, the angular speed of the autonomous mobile apparatus is calculated based on the turning radius and the target linear speed, where the angular speed w of the autonomous mobile apparatus=v/r.

In an embodiment, the step that an angular speed of the autonomous mobile apparatus is calculated based on the current progress of the autonomous mobile apparatus and the target linear speed specifically includes: position values and radians relative to the current position point of the autonomous mobile apparatus during turning of a first position point and a second position point that are reached by the autonomous mobile apparatus during turning are calculated based on the current progress of the autonomous mobile apparatus; a turning radius is calculated based on the radians and the position values of the first position point and the second position point; and the angular speed of the autonomous mobile apparatus is calculated based on the target linear speed and the turning radius.

It should be understood that the position values of the first position point and the second position point that are reached by the autonomous mobile apparatus during turning may be calculated based on the current progress t of the autonomous mobile apparatus and the function B(t). The position value B1 of the first position point=B(t-0.05), and the position value B2 of the second position point=B(t+0.05). The radians rad (B2-B1) of the first position point and the second position point relative to the current position point B of the autonomous mobile apparatus during turning may be acquired.

In a specific implementation, a distance dis (B2-B1) between the first position point and the second position point may be calculated based on the radians rad (B2-B1), the position value B1 of the first position point, and the position value B2 of the second position point, and the turning radius r of the autonomous mobile apparatus=dis (B2-B1)/rad (B2-B1).

In a specific implementation, the angular speed of the autonomous mobile apparatus may be calculated based on the target linear speed v and the turning radius r, where the angular speed w of the autonomous mobile apparatus=v/r.

It should be noted that in a process of performing turning control on the autonomous mobile apparatus, due to slippage on the ground or unevenness of the ground, a deviation from a planned path, etc., the autonomous mobile apparatus has a particular deviation such as a position deviation and an angular deviation. Thus, it is required to calculate the deviation of the autonomous mobile apparatus during turning to obtain a more accurate angular speed.

The step that an angular speed of the autonomous mobile apparatus is calculated based on the current progress of the autonomous mobile apparatus and the target linear speed includes: a current vehicle body orientation and a current vehicle body position of the autonomous mobile apparatus, and a target position of the autonomous mobile apparatus during turning are acquired; an angle between a straight line where the vehicle body orientation is located and a straight line where the target position is located is calculated based on the current vehicle body orientation and the target position, and an angular deviation is obtained; a difference between the current vehicle body position and the target position is calculated, and a position deviation is obtained; and the angular speed of the autonomous mobile apparatus is calculated based on the target linear speed, the turning radius, the angular deviation, and the position deviation.

In a specific implementation, the current vehicle body orientation and the current vehicle body position of the autonomous mobile apparatus, and the target position of the autonomous mobile apparatus during turning may be acquired, and the angle between the straight line where the current vehicle body orientation is located and the straight line where the target position is located is acquired. The target position of the autonomous mobile apparatus during turning is an ideal position reached by the autonomous mobile apparatus during turning under control.

By acquiring a heading angle of the current vehicle body orientation, an angle between a straight line where the heading angle is located and the straight line where the target position is located may be calculated as the angular deviation. The distance difference between the current vehicle body position and the target position is calculated, and the position deviation is obtained. The target position may be located at any point on the preset turning path. When required to move to the target position, the autonomous mobile apparatus may be controlled to advance to the target position based on the current vehicle body orientation and the current vehicle body position. However, due to slippage on the ground or unevenness of the ground in a control process, the autonomous mobile apparatus has a particular deviation during movement, and the distance difference between the current vehicle body position and the target position is positive or negative.

In a specific implementation, the angular deviation and the position deviation may be adjusted through proportional integral derivative (PID) adjustment, and the angular speed of the autonomous mobile apparatus is calculated. The angular speed w of the autonomous mobile apparatus=v/r+PID (angErr)+PID (posErr), where an angErr value for pid control denotes the angular deviation, and the posErr for pid control denotes the position deviation.

S404': the autonomous mobile apparatus is controlled to turn based on the preset turning path at the target ready-for-turning point based on the target linear speed and the angular speed of the autonomous mobile apparatus.

In a specific implementation, the autonomous mobile apparatus may be controlled to turn based on the preset turning path based on the target linear speed and the angular speed of the autonomous mobile apparatus. The greater the angular speed is, the more rapid the decrease of the linear speed is. In the turning process of the autonomous mobile apparatus, a situation that one wheel is more rapid and the other wheel is slower exists. Thus, after the angular speed of the autonomous mobile apparatus is calculated, a wheel distance d between the two wheels of the autonomous mobile apparatus may be acquired, and the speed of the left wheel and the speed of the right wheel are calculated separately. The speed of the left wheel and the speed of the right wheel are calculated according to Formula 2:

$$v1 = v + \frac{w * d}{2}$$
$$v2 = v - \frac{w * d}{2} \quad \text{(Formula 2)}$$

In Formula 2, v1 denotes the speed of the right wheel, v2 denotes the speed of the left wheel, d denotes the wheel distance, v denotes the target linear speed, and w denotes the angular speed of the autonomous mobile apparatus. The mower is controlled to turn based on the calculated speed of the left wheel and the calculated speed of the right wheel, and thus a turning effect is improved.

According to the embodiment, the current linear speed of the autonomous mobile apparatus and the current progress of the autonomous mobile apparatus are acquired. The current linear speed is adjusted to the target linear speed to reduce power of an electric motor. The angular speed of the autonomous mobile apparatus is calculated based on the current progress of the autonomous mobile apparatus and the target linear speed. The autonomous mobile apparatus is controlled to turn based on the preset turning path at the target ready-for-turning point based on the target linear speed and the angular speed of the autonomous mobile apparatus. The autonomous mobile apparatus is controlled to turn based on the preset turning path, so that stability of turning is improved.

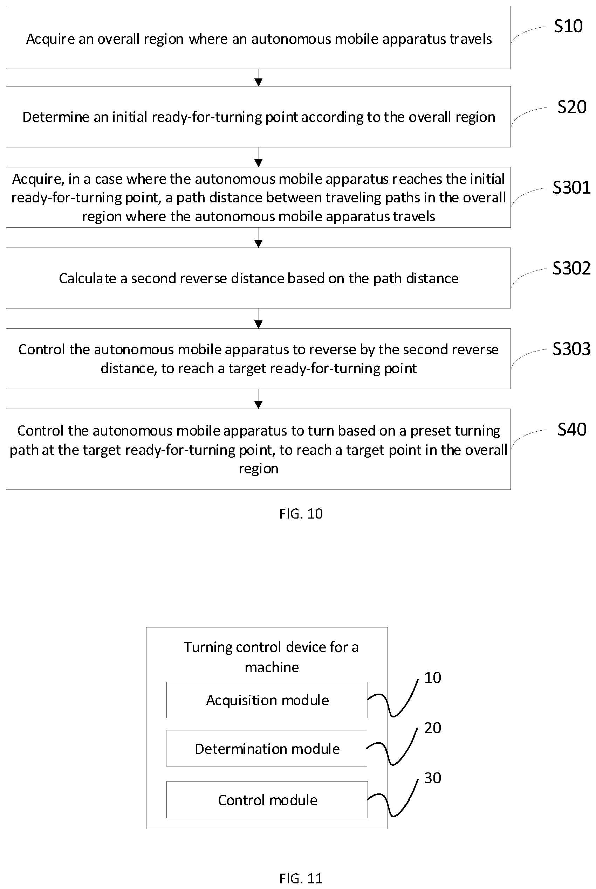

With reference to FIG. 10, a schematic flowchart of a fifth embodiment of a turning control method for an autonomous mobile apparatus according to the present disclosure is shown in FIG. 10.

Based on the first embodiment, S30 of the turning control method for an autonomous mobile apparatus in the embodiment specifically includes:

S301: in a case where the autonomous mobile apparatus reaches the initial ready-for-turning point, a path distance between traveling paths in the overall region where the autonomous mobile apparatus travels is acquired.

It should be noted that when turning control is performed on the autonomous mobile apparatus according to the solution, three-point turning control is employed, the initial ready-for-turning point is a boundary point of one path reached by the autonomous mobile apparatus during traveling. The path distance between the traveling paths in the overall region where the autonomous mobile apparatus travels may be acquired. The path distance may be of any value in a range of 30 cm to 60 cm, and the path distance between the traveling paths may be the same or not.

S302: a second reverse distance is calculated based on the path distance.

In a specific implementation, the second reverse distance is a distance by which the mower reverses after reaching the initial ready-for-turning point, and the second reverse distance H2 may be a half of the path distance L2.

S303: the autonomous mobile apparatus is controlled to reverse by the second reverse distance, to reach the target ready-for-turning point.

Understandably, after the second reverse distance H2 is calculated, the autonomous mobile apparatus may be controlled to reverse by the second reverse distance, to reach the target ready-for-turning point, where the distance between the initial ready-for-turning point and the target ready-for-turning point is the second reverse distance.

According to the embodiment, in a case where the autonomous mobile apparatus reaches the initial ready-for-turning point, the path distance between the traveling paths in the overall region where the autonomous mobile apparatus travels is acquired. The second reverse distance is calculated based on the path distance. The autonomous mobile apparatus is controlled to reverse by the second reverse distance, to reach the target ready-for-turning point. The autonomous mobile apparatus is controlled to reverse to the target ready-for-turning point. The autonomous mobile apparatus is controlled to turn at the target ready-for-turning point, and thus a turning effect is improved.

With reference to FIG. 11, a structural block diagram of a first embodiment of a turning control device for an autonomous mobile apparatus according to the present disclosure is shown in FIG. 11.

As shown in FIG. 11, the turning control device for an autonomous mobile apparatus according to the embodiment of the present disclosure includes:

an acquisition module 10 configured to acquire an overall region where the autonomous mobile apparatus travels;
a determination module 20 configured to determine an initial ready-for-turning point according to the overall region; and
a control module 30 configured to control, in a case where the autonomous mobile apparatus reaches the initial ready-for-turning point, the autonomous mobile apparatus to reverse to a target ready-for-turning point; where
the control module 30 is further configured to control the autonomous mobile apparatus to turn based on a preset turning path at the target ready-for-turning point, to reach a target point in the overall region.

According to the embodiment, the overall region where the autonomous mobile apparatus travels is acquired. The initial ready-for-turning point is determined according to the overall region. In a case where the autonomous mobile apparatus reaches the initial ready-for-turning point, the autonomous mobile apparatus is controlled to reverse to the target ready-for-turning point. The autonomous mobile apparatus is controlled to turn based on the preset turning path at the target ready-for-turning point, to reach the target point in the overall region. The autonomous mobile apparatus is controlled to reverse and then turn, so that a turning effect is improved, and irreversible damage to a lawn is avoided.

In an embodiment, the control module 30 is further configured to acquire coordinates of a current position point of the autonomous mobile apparatus during turning, position coordinates of the initial ready-for-turning point, position coordinates of the target ready-for-turning point, and position coordinates of the target point; calculate a tilt angle of the autonomous mobile apparatus based on the coordinates of the current position point and the position coordinates of the initial ready-for-turning point; calculate a current progress of the autonomous mobile apparatus based on the tilt angle of the autonomous mobile apparatus according to a bisection method; calculate the preset turning path based on the current progress of the autonomous mobile apparatus, the position coordinates of the initial ready-for-turning point, the position coordinates of the target ready-for-turning point, and the position coordinates of the target point; and control the autonomous mobile apparatus to turn based on the preset turning path at the target ready-for-turning point, to reach the target point in the overall region.

In an embodiment, the control module 30 is further configured to control the autonomous mobile apparatus to turn based on the preset turning path at the target ready-for-turning point, to reach a first path point; calculate a distance between the first path point and the target point; acquire a path distance between traveling paths in the overall region where the autonomous mobile apparatus travels; calculate a first reverse distance based on the distance between the first path point and the target point and the path distance; control the autonomous mobile apparatus to reverse to a second path point based on the first reverse distance; and control the autonomous mobile apparatus to turn based on the preset turning path at the second path point, to reach the target point in the overall region.

In an embodiment, the control module 30 is further configured to acquire a current linear speed of the autonomous mobile apparatus and a current progress of the autonomous mobile apparatus; adjust the current linear speed to a target linear speed; calculate an angular speed of the autonomous mobile apparatus based on the current progress of the autonomous mobile apparatus and the target linear speed; and control the autonomous mobile apparatus to turn based on the preset turning path at the target ready-for-turning point based on the target linear speed and the angular speed of the autonomous mobile apparatus.

In an embodiment, the control module 30 is further configured to calculate position values and radians relative to the current position point of the autonomous mobile apparatus during turning of a first position point and a second position point that are reached by the autonomous mobile apparatus during turning based on the current progress of the autonomous mobile apparatus; calculate a turning radius based on the radians and the position values of the first position point and the second position point; and calculate the angular speed of the autonomous mobile apparatus based on the target linear speed and the turning radius.

In an embodiment, the control module 30 is further configured to acquire a current vehicle body orientation and a current vehicle body position of the autonomous mobile apparatus, and a target position of the autonomous mobile apparatus during turning; calculate an angle between a straight line where the vehicle body orientation is located and a straight line where the target position is located based on the current vehicle body orientation and the target position, and obtain an angular deviation; calculate a difference between the current vehicle body position and the target position, and obtain a position deviation; and calculate the angular speed of the autonomous mobile apparatus based on the target linear speed, the turning radius, the angular deviation, and the position deviation.

In an embodiment, the control module 30 is further configured to acquire, in a case where the autonomous mobile apparatus reaches the initial ready-for-turning point, a path distance between traveling paths in the overall region where the autonomous mobile apparatus travels; calculate a second reverse distance based on the path distance; and control the autonomous mobile apparatus to reverse by the second reverse distance, to reach the target ready-for-turning point.

In an embodiment, the determination module 20 is further configured to divide the overall region, and obtain a plurality of traveling path data; obtain boundary point data of traveling of the autonomous mobile apparatus according to the overall region; and determine the initial ready-for-turning point based on the plurality of traveling path data and the boundary point data.

In addition, to achieve the above objective, the present disclosure further provides an autonomous mobile apparatus. The autonomous mobile apparatus includes a vehicle front, a vehicle body, a traveling apparatus, and a controller, where the vehicle front is detachably connected to the vehicle body, the traveling apparatus and the controller are arranged at the vehicle body, the controller is configured to control the traveling apparatus to turn, the controller is configured to run a turning control program for the autonomous mobile apparatus, and the turning control program for the autonomous mobile apparatus is configured to implement steps of the above turning control method for an autonomous mobile apparatus.

The autonomous mobile apparatus employs all the technical solutions in all the embodiments described above, and thus at least has all the beneficial effects brought by the technical solutions in the embodiments described above, which will not be repeated herein.

It should be understood that the above is merely illustrative, and does not constitute any limitation on the technical solutions of the present disclosure. In specific application, those skilled in the art can make settings as demanded, which is not limited in the present disclosure.

It should be noted that workflows described above are merely illustrative, and do not limit the scope of protection of the present disclosure. In practical application, those skilled in the art can select some or all of the workflows according to the actual demand to achieve the objective of the solution in the embodiment, which is not limited herein.

In addition, reference can be made to the turning control method for an autonomous mobile apparatus according to any embodiment of the present disclosure for technical details not described in detail in the embodiment, which will not be repeated herein.

In addition, it should be noted that the terms "comprise", "include", "encompass", or their any other variations are intended to cover the non-exclusive inclusion herein. Thus, a process, method, article, or system including a series of elements includes those elements, and further includes other elements not explicitly listed, or further includes elements inherent to such a process, method, article, or system. Without more limitations, an element defined by a phrase "include a..." and "comprise a..." does not exclude a case where other identical elements still exist in the process, method, article, or system including the element.

The serial numbers in the above embodiments of the present disclosure are merely for description, and do not represent the superiority or inferiority of the embodiments.

Through the descriptions in the above implementations, those skilled in the art can clearly understand that the method in the above embodiments can be implemented through software and a necessary general hardware platform, or certainly can be implemented through hardware. In many cases, the former is a better implementation. Based on such understanding, the technical solutions in essence of the present disclosure or the part that contributes to the prior art can be embodied in a form of software product. The computer software product is stored in a storage medium (such as a read-only memory (ROM)/a random access memory (RAM), a magnetic disk, and an optical disk), and includes a plurality of instructions to cause a terminal apparatus (such as a mobile phone, a computer, a server, and a network apparatus) to execute the method in each embodiment of the present disclosure.

What are described above are merely preferred embodiments of the present disclosure, and do not limit the scope of patent of the present disclosure. The equivalent structures or equivalent flow transformations made based on the contents in the description and the accompanying drawings of the present disclosure or directly or indirectly applied to other related technical fields similarly fall within the scope of patent protection of the present disclosure.

**Claims**

1. A turning control method for an autonomous mobile apparatus, comprising:

   acquiring an overall region where the autonomous mobile apparatus travels;
   determining an initial ready-for-turning point according to the overall region;
   controlling, in a case where the autonomous mobile apparatus reaches the initial ready-for-turning point, the autonomous mobile apparatus to reverse to a target ready-for-turning point; and
   controlling the autonomous mobile apparatus to turn based on a preset turning path at the target ready-for-turning point, to reach a target point in the overall region.

2. The turning control method for an autonomous mobile apparatus according to claim 1, wherein the step of controlling the autonomous mobile apparatus to turn based on a preset turning path at the target ready-for-turning point, to reach a target point in the overall region comprises:

   acquiring coordinates of a current position point of the autonomous mobile apparatus during turning, position coordinates of the initial ready-for-turning point, position coordinates of the target ready-for-turning point, and position coordinates of the target point;
   calculating a tilt angle of the autonomous mobile apparatus based on the coordinates of the current position point and the position coordinates of the initial ready-for-turning point;
   calculating a current progress of the autonomous mobile apparatus based on the tilt angle of the autonomous mobile apparatus according to a bisection method;
   calculating the preset turning path based on the current progress of the autonomous mobile apparatus, the position coordinates of the initial ready-for-turning point, the position coordinates of the target ready-for-turning point, and the position coordinates of the target point; and
   controlling the autonomous mobile apparatus to turn based on the preset turning path at the target ready-for-turning point, to reach the target point in the overall region.

3. The turning control method for an autonomous mobile apparatus according to claim 2, wherein the step of calculating the preset turning path based on the current progress of the autonomous mobile apparatus, the position coordinates of the initial ready-for-turning point, the position coordinates of the target ready-for-turning point, and the position coordinates of the target point comprises:

   calculating path point data during turning based on the current progress of the autonomous mobile apparatus, the position coordinates of the initial ready-for-turning point, the position coordinates of the target ready-for-turning point, and the position coordinates of the target point; and
   connecting all the path point data, and forming the preset turning path.

4. The turning control method for an autonomous mobile apparatus according to claim 3, wherein the path point data $B(t)=(1-t)^2 \cdot P1 + 2(1-t)t \cdot P2 + t^2 \cdot P3$, wherein t denotes the current progress of the autonomous mobile apparatus, and P1, P2, and P3 correspond to the position coordinates of the initial ready-for-turning point, the position coordinates of the target ready-for-turning point, and the position coordinates of the target point respectively.

5. The turning control method for an autonomous mobile apparatus according to claim 2, wherein the step of controlling the autonomous mobile apparatus to turn based on the preset turning path at the target ready-for-turning point, to reach the target point in the overall region comprises:

   controlling the autonomous mobile apparatus to turn based on the preset turning path at the target ready-for-turning point, to reach a first path point;
   calculating a distance between the first path point and the target point;
   acquiring a path distance between traveling paths in the overall region where the autonomous mobile apparatus travels;
   calculating a first reverse distance based on the distance between the first path point and the target point and the path distance;
   controlling the autonomous mobile apparatus to reverse to a second path point based on the first reverse distance; and
   controlling the autonomous mobile apparatus to turn based on the preset turning path at the second path point, to reach the target point in the overall region.

6. The turning control method for an autonomous mobile apparatus according to claim 1, wherein the step of controlling the autonomous mobile apparatus to turn based on a preset turning path at the target ready-for-turning point, to reach a target point in the overall region comprises:

   acquiring a current linear speed of the autonomous mobile apparatus and a current progress of the autonomous mobile apparatus;
   adjusting the current linear speed to a target linear speed;
   calculating an angular speed of the autonomous mobile apparatus based on the current progress of the autonomous mobile apparatus and the target linear speed; and
   controlling the autonomous mobile apparatus to turn based on the preset turning path at the target ready-for-turning point based on the target linear speed and the angular speed of the autonomous mobile apparatus.

7. The turning control method for an autonomous mobile apparatus according to claim 6, wherein the step of calculating an angular speed of the autonomous mobile apparatus based on the current progress of the autonomous mobile apparatus and the target linear speed comprises:

   calculating a turning radius of the autonomous mobile apparatus during turning based on the current progress of the autonomous mobile apparatus; and
   calculating the angular speed of the autonomous mobile apparatus based on the turning radius and the target linear speed.

8. The turning control method for an autonomous mobile apparatus according to claim 6, wherein the step of calculating an angular speed of the autonomous mobile apparatus based on the current progress of the autonomous mobile apparatus and the target linear speed comprises:

   calculating position values and radians relative to the current position point of the autonomous mobile apparatus during turning of a first position point and a second position point that are reached by the autonomous mobile apparatus during turning based on the current progress of the autonomous mobile apparatus;
   calculating a turning radius based on the radians and the position values of the first position point and the second position point; and
   calculating the angular speed of the autonomous mobile apparatus based on the target linear speed and the turning radius.

9. The turning control method for an autonomous mobile apparatus according to claim 8, wherein the step of calculating the angular speed of the autonomous mobile apparatus based on the target linear speed and the turning radius comprises:

   acquiring a current vehicle body orientation and a current vehicle body position of the autonomous mobile apparatus, and a target position of the autonomous mobile apparatus during turning;
   calculating an angle between a straight line where the vehicle body orientation is located and a straight line where the target position is located based on the current vehicle body orientation and the target position, and obtaining an angular deviation;
   calculating a difference between the current vehicle body position and the target position, and obtaining a position deviation; and
   calculating the angular speed of the autonomous mobile apparatus based on the target linear speed, the turning radius, the angular deviation, and the position deviation.

10. The turning control method for an autonomous mobile apparatus according to claim 6, wherein the step of controlling the autonomous mobile apparatus to turn based on the preset turning path at the target ready-for-turning point based on the target linear speed and the angular speed of the autonomous mobile apparatus comprises:

calculating a speed of a left wheel and a speed of a right wheel based on the target linear speed and the angular speed of the autonomous mobile apparatus; and
controlling the autonomous mobile apparatus to turn based on the preset turning path at the target ready-for-turning point based on the speed of the left wheel and the speed of the right wheel.

11. The turning control method for an autonomous mobile apparatus according to claim 1, wherein the step of controlling, in a case where the autonomous mobile apparatus reaches the initial ready-for-turning point, the autonomous mobile apparatus to reverse to a target ready-for-turning point comprises:

acquiring, in a case where the autonomous mobile apparatus reaches the initial ready-for-turning point, a path distance between traveling paths in the overall region where the autonomous mobile apparatus travels;
calculating a second reverse distance based on the path distance; and
controlling the autonomous mobile apparatus to reverse by the second reverse distance, to reach the target ready-for-turning point.

12. The turning control method for an autonomous mobile apparatus according to claim 11, wherein the second reverse distance is a half of the path distance.

13. The turning control method for an autonomous mobile apparatus according to any one of claims 1-11, wherein the step of determining an initial ready-for-turning point according to the overall region comprises:

dividing the overall region, and obtaining a plurality of traveling path data;
obtaining boundary point data of traveling of the autonomous mobile apparatus according to the overall region; and
determining the initial ready-for-turning point based on the plurality of traveling path data and the boundary point data.

14. A turning control device for an autonomous mobile apparatus, comprising:

an acquisition module configured to acquire an overall region where the autonomous mobile apparatus travels;
a determination module configured to determine an initial ready-for-turning point according to the overall region; and
a control module configured to control, in a case where the autonomous mobile apparatus reaches the initial ready-for-turning point, the autonomous mobile apparatus to reverse to a target ready-for-turning point; wherein
the control module is further configured to control the autonomous mobile apparatus to turn based on a preset turning path at the target ready-for-turning point, to reach a target point in the overall region.

15. The turning control device for an autonomous mobile apparatus according to claim 14, wherein the control module is further configured to:

acquire coordinates of a current position point of the autonomous mobile apparatus during turning, position coordinates of the initial ready-for-turning point, position coordinates of the target ready-for-turning point, and position coordinates of the target point;
calculate a tilt angle of the autonomous mobile apparatus based on the coordinates of the current position point and the position coordinates of the initial ready-for-turning point;
calculate a current progress of the autonomous mobile apparatus based on the tilt angle of the autonomous mobile apparatus according to a bisection method;
calculate the preset turning path based on the current progress of the autonomous mobile apparatus, the position coordinates of the initial ready-for-turning point, the position coordinates of the target ready-for-turning point, and the position coordinates of the target point; and
control the autonomous mobile apparatus to turn based on the preset turning path at the target ready-for-turning point, to reach the target point in the overall region.

16. The turning control device for an autonomous mobile apparatus according to claim 15, wherein the control module is further configured to:

calculate path point data during turning based on the current progress of the autonomous mobile apparatus, the position coordinates of the initial ready-for-turning point, the position coordinates of the target ready-for-turning point, and the position coordinates of the target point; and connect all the path point data, and form the preset turning path.

17. An autonomous mobile apparatus, comprising a vehicle front, a vehicle body, a traveling apparatus, and a controller, wherein the vehicle front is detachably connected to the vehicle body, the traveling apparatus and the controller are arranged at the vehicle body, the controller is configured to control the traveling apparatus to turn, the controller is configured to run a turning control program for the autonomous mobile apparatus, and the turning control program for the autonomous mobile apparatus is configured to implement the following steps:

acquiring an overall region where the autonomous mobile apparatus travels;
determining an initial ready-for-turning point according to the overall region;
controlling, in a case where the autonomous mobile apparatus reaches the initial ready-for-turning point, the autonomous mobile apparatus to reverse to a target ready-for-turning point; and
controlling the autonomous mobile apparatus to turn based on a preset turning path at the target ready-for-turning point, to reach a target point in the overall region.

18. The autonomous mobile apparatus according to claim 17, wherein the autonomous mobile apparatus is a tracked mower.

19. The autonomous mobile apparatus according to claim 17, wherein the turning control program for the autonomous mobile apparatus is configured to further implement the following steps:

acquiring coordinates of a current position point of the autonomous mobile apparatus during turning, position coordinates of the initial ready-for-turning point, position coordinates of the target ready-for-turning point, and position coordinates of the target point;
calculating a tilt angle of the autonomous mobile apparatus based on the coordinates of the current position point and the position coordinates of the initial ready-for-turning point;
calculating a current progress of the autonomous mobile apparatus based on the tilt angle of the autonomous mobile apparatus according to a bisection method;
calculating the preset turning path based on the current progress of the autonomous mobile apparatus, the position coordinates of the initial ready-for-turning point, the position coordinates of the target ready-for-turning point, and the position coordinates of the target point; and

controlling the autonomous mobile apparatus to turn based on the preset turning path at the target ready-for-turning point, to reach the target point in the overall region.

20. The turning control method for an autonomous mobile apparatus according to claim 19, wherein the turning control program for the autonomous mobile apparatus is configured to further implement the following steps:

calculating path point data during turning based on the current progress of the autonomous mobile apparatus, the position coordinates of the initial ready-for-turning point, the position coordinates of the target ready-for-turning point, and the position coordinates of the target point; and connecting all the path point data, and forming the preset turning path.

| | |
|---|---|
| Acquire an overall region where an autonomous mobile apparatus travels | S10 |
| Determine an initial ready-for-turning point according to the overall region | S20 |
| Control, in a case where the autonomous mobile apparatus reaches the initial ready-for-turning point, the autonomous mobile apparatus to reverse to a target ready-for-turning point | S30 |
| Control the autonomous mobile apparatus to turn based on the preset turning path at the target ready-for-turning point, to reach a target point in the overall region | S40 |

FIG. 1

FIG. 2

FIG. 3

FIG. 4

Acquire an overall region where an autonomous mobile apparatus travels — S10

Determine an initial ready-for-turning point according to the overall region — S20

Control, in a case where the autonomous mobile apparatus reaches the initial ready-for-turning point, the autonomous mobile apparatus to reverse to a target ready-for-turning point — S30

Acquire coordinates of a current position point of the autonomous mobile apparatus during turning, position coordinates of the initial ready-for-turning point, position coordinates of the target ready-for-turning point, and position coordinates of a target point — S401

Calculate a tilt angle of the autonomous mobile apparatus based on the coordinates of the current position point and the position coordinates of the initial ready-for-turning point — S402

Calculate a current progress of the autonomous mobile apparatus based on the tilt angle of the autonomous mobile apparatus according to a bisection method — S403

Calculate the preset turning path based on the current progress of the autonomous mobile apparatus, the position coordinates of the initial ready-for-turning point, the position coordinates of the target ready-for-turning point, and the position coordinates of the target point — S404

Control the autonomous mobile apparatus to turn based on the preset turning path at the target ready-for-turning point to reach the target point in the overall region — S405

FIG. 5

FIG. 6

Acquire coordinates of a current position point of an autonomous mobile apparatus during turning, position coordinates of an initial ready-for-turning point, position coordinates of a target ready-for-turning point, and position coordinates of a target point — S401

Calculate a tilt angle of the autonomous mobile apparatus based on the coordinates of the current position point and the position coordinates of the initial ready-for-turning point — S402

Calculate a current progress of the autonomous mobile apparatus based on the tilt angle of the autonomous mobile apparatus according to a bisection method — S403

Calculate a preset turning path based on the current progress of the autonomous mobile apparatus, the position coordinates of the initial ready-for-turning point, the position coordinates of the target ready-for-turning point, and the position coordinates of the target point — S404

Control the autonomous mobile apparatus to turn based on the preset turning path at the target ready-for-turning point to reach a first path point — S4051

Calculate a distance between the first path point and the target point — S4052

Acquire a path distance between traveling paths in an overall region where the autonomous mobile apparatus travels — S4053

Calculate a first reverse distance based on the distance between the first path point and the target point and the path distance — S4054

Control the autonomous mobile apparatus to reverse to a second path point based on the first reverse distance — S4055

Control the autonomous mobile apparatus to turn based on the preset turning path at the second path point, to reach the target point in the overall region — S4056

FIG. 7

FIG. 8

Acquire an overall region where an autonomous mobile apparatus travels — S10

Determine an initial ready-for-turning point according to the overall region — S20

Control, in a case where the autonomous mobile apparatus reaches the initial ready-for-turning point, the autonomous mobile apparatus to reverse to a target ready-for-turning point — S30

Acquire a current linear speed of the autonomous mobile apparatus and a current progress of the autonomous mobile apparatus — S401'

Adjust the current linear speed to a target linear speed — S402'

Calculate an angular speed of the autonomous mobile apparatus based on the current progress of the autonomous mobile apparatus and the target linear speed — S403'

Control the autonomous mobile apparatus to turn based on the preset turning path at the target ready-for-turning point based on the target linear speed and the angular speed of the autonomous mobile apparatus — S404'

FIG. 9

Acquire an overall region where an autonomous mobile apparatus travels — S10

Determine an initial ready-for-turning point according to the overall region — S20

Acquire, in a case where the autonomous mobile apparatus reaches the initial ready-for-turning point, a path distance between traveling paths in the overall region where the autonomous mobile apparatus travels — S301

Calculate a second reverse distance based on the path distance — S302

Control the autonomous mobile apparatus to reverse by the second reverse distance, to reach a target ready-for-turning point — S303

Control the autonomous mobile apparatus to turn based on a preset turning path at the target ready-for-turning point, to reach a target point in the overall region — S40

FIG. 10

Turning control device for a machine

Acquisition module — 10

Determination module — 20

Control module — 30

FIG. 11

## INTERNATIONAL SEARCH REPORT

| International application No. |
| --- |
| **PCT/CN2023/129982** |

### A. CLASSIFICATION OF SUBJECT MATTER

G05D1/00(2024.01)i; B62D6/00(2006.01)i; A01D34/00(2006.01)i; B62D15/02(2006.01)i; B62D101/00(2006.01)i

According to International Patent Classification (IPC) or to both national classification and IPC

### B. FIELDS SEARCHED

Minimum documentation searched (classification system followed by classification symbols)

IPC:G05D B62D A01D

Documentation searched other than minimum documentation to the extent that such documents are included in the fields searched

Electronic data base consulted during the international search (name of data base and, where practicable, search terms used)

CNTXT, CNKI, ENTXTC, VEN, ENTXT: 机器人, 车, 转弯, 拐弯, 调头, 路径, 曲线, 圆弧, 后退, 回退, 退后, 二次, 再次, 鱼尾, 二分法, 贝塞尔, 时间, 比例, 进度, 倾角, 航向角, 半径, 减速, 角速度, 距离, turn+, trajectory, path, initial, target, position, distance, back, reverse, rearward, second, curve, bezier, time, angle, speed, velocity, radius

### C. DOCUMENTS CONSIDERED TO BE RELEVANT

| Category* | Citation of document, with indication, where appropriate, of the relevant passages | Relevant to claim No. |
| --- | --- | --- |
| X | CN 116507986 A (YANMAR HOLDINGS CO., LTD.) 28 July 2023 (2023-07-28) description, paragraphs [0006]-[0211], and figures 1-23 | 1, 11-14, 17, 18 |
| Y | CN 116507986 A (YANMAR HOLDINGS CO., LTD.) 28 July 2023 (2023-07-28) description, paragraphs [0006]-[0211], and figures 1-23 | 2-10, 13, 15, 16, 19, 20 |
| Y | CN 102129710 A (BEIJING PIXEL SOFTWARE TECHNOLOGY JOINT-STOCK CO., LTD.) 20 July 2011 (2011-07-20) description, paragraphs [0006]-[0092] | 2-5, 13, 15, 16, 19, 20 |
| Y | CN 116382282 A (SHENZHEN ECOFLOW INNOVATION TECHNOLOGY CO., LTD.) 04 July 2023 (2023-07-04) description, paragraphs [0003]-[0173] | 6-10, 13 |
| X | JP 2021078467 A (YANMAR POWER TECHNOLOGY CO., LTD.) 27 May 2021 (2021-05-27) description, paragraphs [0004]-[0155], and figures 1-19 | 1, 11-14, 17, 18 |
| X | CN 111386030 A (KUBOTA CORP.) 07 July 2020 (2020-07-07) description, paragraphs [0014]-[0522], and figure 34 | 1, 14, 17, 18 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 May 2024** | **22 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/129982** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 115129063 A (XINJIANG AGRICULTURAL UNIVERSITY) 30 September 2022 (2022-09-30) <br> entire document | 1-20 |
| A | CN 115719396 A (DBAPPSECURITY CO., LTD.) 28 February 2023 (2023-02-28) <br> entire document | 1-20 |

Form PCT/ISA/210 (second sheet) (July 2022)

**INTERNATIONAL SEARCH REPORT**
Information on patent family members

International application No.

**PCT/CN2023/129982**

| Patent document cited in search report | | | Publication date (day/month/year) | Patent family member(s) | | | Publication date (day/month/year) |
|---|---|---|---|---|---|---|---|
| CN | 116507986 | A | 28 July 2023 | None | | | |
| CN | 102129710 | A | 20 July 2011 | None | | | |
| CN | 116382282 | A | 04 July 2023 | None | | | |
| JP | 2021078467 | A | 27 May 2021 | JP | 7316198 | B2 | 27 July 2023 |
| CN | 111386030 | A | 07 July 2020 | None | | | |
| CN | 115129063 | A | 30 September 2022 | None | | | |
| CN | 115719396 | A | 28 February 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311172327